# EUROPEAN PATENT SPECIFICATION

(11) **EP 1 512 559 B1**
(45) Date of publication and mention of the grant of the patent: **09.12.2009**
(21) Application number: 04104293.8
(22) Date of filing: 06.09.2004
(51) Int. Cl.: B60G 17/015

(54) **Failsafe operation of active vehicle suspension**
Aktive Fahrzeugfederung mit Notbetrieb
Suspension active pour véhicule avec système de sûreté

(30) Priority: 08.09.2003 US 657496
(43) Date of publication of application: 09.03.2005
(73) Proprietor: BOSE CORPORATION, Framingham, Massachusetts 01701-9168 (US)
(72) Inventor: Bender, Paul T., Framingham, MA 01701-9168 (US)
(74) Representative: Brunner, Michael John

(56) References cited:
- EP-A- 0 415 780
- EP-A- 0 436 870
- EP-A- 0 495 565
- US-A- 4 815 575
- US-A- 5 371 754
- US-B1- 6 239 566

## Description

### TECHNICAL FIELD

This invention relates to failsafe operation of an active vehicle suspension.

### BACKGROUND

A vehicle suspension performs many critical functions, such as supporting a weight of a vehicle body, providing directional control during handling maneuvers, and isolating passengers comfortably from road disturbances. Active suspension systems, such as electrically or hydraulically actuated systems, can generate forces and motions between the vehicle's body and its wheel assemblies to control a vehicle's ride quality.

EP-A-0495565 discloses a vehicle suspension system having an electromagnetic actuator having an armature and a stator including a coil assembly, and power electronics for powering the electromagnetic actuator in normal use, with a failure mode which includes a fail-safe damping rate for the suspension system.

### SUMMARY

According to the invention there is provided a vehicle suspension system having an electromagnetic actuator having an armature and a stator including a coil assembly, and power electronics for powering the electromagnetic actuator in normal use; characterised by a clamp circuit, the clamp circuit being powered on failure of the power to the actuator by a back EMF generated within and as a result of movement of the actuator by the armature moving relative to the stator, and the clamp circuit including a solid state switch disposed across the coil assembly, and the clamp circuit being arranged so that, upon a loss of power to the actuator, the switch is closed so as to clamp the coil assembly and cause a dynamically variable damping force to be generated on movement of the electromagnetic actuator.

One or more of the following features can also be included. The actuator coil assembly can be a multiple-phase coil assembly, the switch electrically connecting one or more coil ends to change the passive damping characteristic of the actuator. The switch can be a silicon device, the clamp circuit can include a rectifier and the switch can be a single unidirectional switch. The back EMF can be boosted by a supplemental circuit. The supplemental circuit can include a bipolar Royer oscillator capable of operating at an input voltage approximately 0.5 volts.

In embodiments, the clamp circuit can be enabled during a vehicle startup and shutdown, and/or when a failure is detected. The passive damping characteristic of the actuator can also be changed via pulsing the clamp circuit.

The invention includes a method of operating such a vehicle suspension system, including generating a passive damping characteristic of the actuator by movement of the actuator. The actuator motor can be a linear motor or a rotary motor.

The invention can include one or more of the following advantages.

A vehicle suspension system has a linear or rotary motor actuator that, upon a loss of electrical power, provides a desired level of passive damping of the motion of a wheel assembly with respect to a vehicle body. The actuator is configured such that its passive damping characteristics act in concert with other passive suspension components selected for efficient suspension operation under normal conditions, to provide for safe handling and a relatively comfortable ride until the vehicle can be serviced.

The vehicle suspension system employs power developed by the actuator itself to activate circuitry to provide the desired passive damping characteristics.

The system provides a vehicle suspension system with a robust failure mode that can be tailored, by appropriate selection of mechanical and electrical component parameters, to reasonably simulate the passive response of a traditional, mechanical suspension.

Maintaining the desired passive damping characteristics by employing power generated within the actuator itself, such as from the back electromotive force (EMF) generated by actuator load and motion, results in a stable shut down mode and increases overall system efficiency by avoiding a need for normally closed switches that must be actively held open during normal operation.

In a self-clamped, controlled, shut down mode, the actuator need not require any electrical power from an external source, such as a battery or capacitor.

The details of one or more embodiments of the invention are set forth in the accompanying drawings and the description below. Other features, objects, and advantages of the invention will be apparent from the description and drawings, and from the claims.

### DESCRIPTION OF DRAWINGS

FIG. 1 is a block diagram of an active vehicle suspension system.
FIG. 2 is a system block diagram.
FIG. 3 shows a failsafe clamp circuit powered by back EMF.
FIG. 4 shows a failsafe clamp circuit powered by a large valued capacitor.
FIG. 5 shows a failsafe clamp circuit powered by a battery.

Like reference symbols in the various drawings indicate like elements.

### DETAILED DESCRIPTION

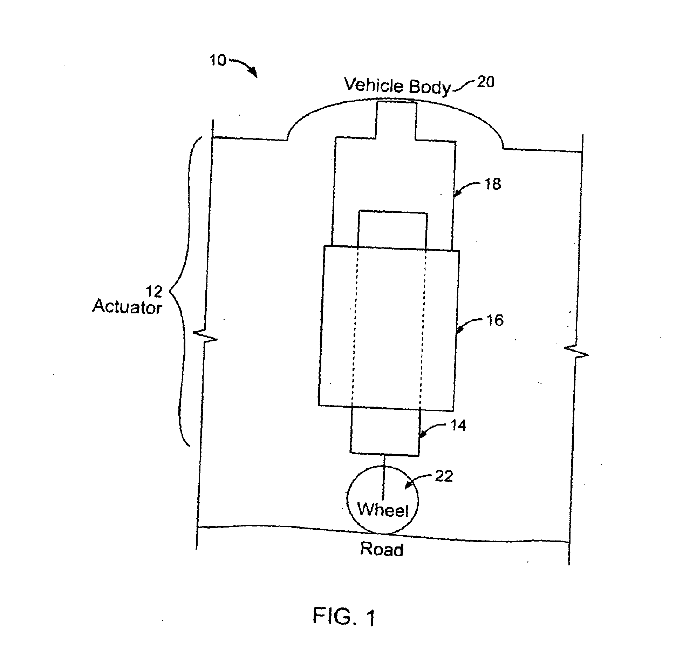

As shown in FIG. 1, an exemplary system 10 includes active vehicle suspension actuator 12. The actuator 12 includes an armature 14 movable with respect to a stator 16. The armature 14 can include permanent magnets and stator 16 can include multiple phases of coils (not shown). By exciting the coils of stator 16 with current, electrical energy is converted into mechanical work. By appropriately controlling the currents into each of the coils, a desired variation in force can be produced by actuator 12. In this example, a linear electromagnetic motor configuration is utilized, but it should be understood that other types of motor configurations, such as rotary motors or moving coil designs, are also applicable. Also, in this example, a three-phase coil assembly is assumed, but is should be understood that other numbers and arrangements of coils are also applicable. The invention should not be limited to the exemplary active vehicle suspension system, as it is applicable to other applications such as a conventional passive vehicle suspension system and any systems incorporating an actuator, such as a robot.

Stator 16 is attachable to an end of a top cap 18, which is a metallic housing that defines an internal cavity. Top cap 18 further affixes to a vehicle body 20, while armature 14 affixes to a wheel assembly 22 and travels through the internal cavity of top cap 18. Depending upon packaging considerations, electronics to control actuator 12 can be placed inside top cap 18 such that the armature's motion does not interfere with the electronics. Control electronics can also be packaged externally to the actuator 12.

There are a variety of possible implementations for actuator 12, such as those described in U. S. Patent 5,574,445 (Maresca et al.) for a linear electromagnetic motor.

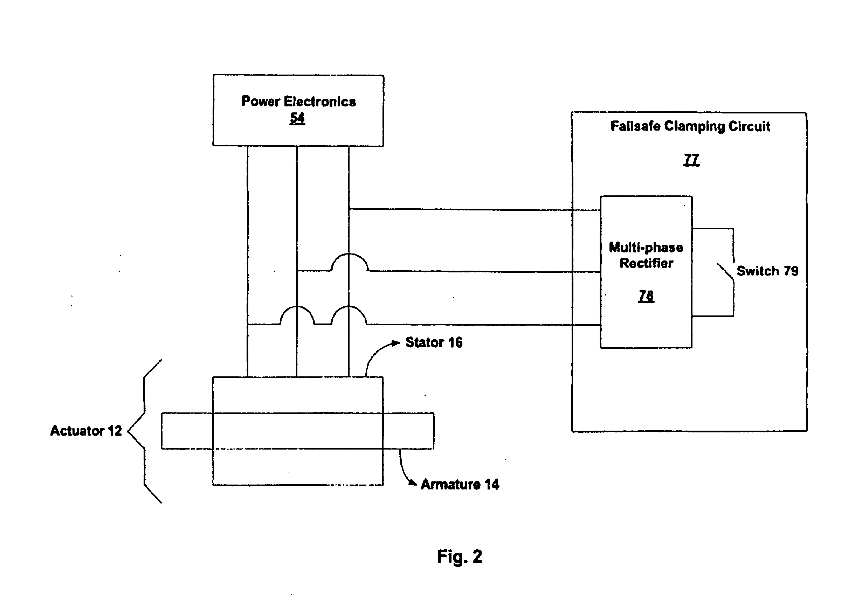

As shown in FIG. 2, during normal operation of actuator 12, switching power electronics 54 controls currents in coils of stator 16 to generate a desired force between the vehicle body 20 and wheel assembly 22. The coils of stator 16 can be organized into phases and each phase can be driven by solid-state half-bridge switches.

A single-phase motor has a coil, or winding, assembly with two ends. A multi-phase motor has a coil, or winding, assembly with multiple ends. If one electrically connects together, or clamps, the coil assembly by connecting or clamping some or all of the coil ends of an electromagnetic actuator, a damping force is generated. Specifically, a back electromotive force (EMF) is generated when the magnets in armature 14 move relative to the coils in stator 16. By clamping the coils, this back EMF is dissipated in the resistance of the coils and a damping force results. The damping force generated is related to the relative velocity of the stator 16 and armature 14. As a result, a clamped actuator generates a damping force in a manner similar to a traditional shock-absorber.

One manner of clamping the coils of stator 16 is for power electronics 54 to stop switching and command some or all of its half-bridges to hold either their low-side or high-side switches in a constant on state. This has an effect of connecting all of the coil leads together. When power electronics 54 operates in this mode, it is referred to as active clamping.

In addition to generating forces to provide a comfortable ride to vehicle occupants, the forces generated by actuator 12 serve a safety function by damping gross vehicle motions and damping excessive wheel vibrations. In case of a failure in the power electronics 54, or during startup and shutdown, these safety-related forces must still be generated. Since, in these situations, the power electronics 54 cannot be relied upon to provide active clamping, a separate failsafe clamping circuit 77 is also connected to the coils of stator 16.

There are several ways to provide a failsafe clamping function. A mechanical relay can be employed to physically connect the leads of the coils. But mechanical relays are prone to failures when subjected to the vibration and temperature extremes found in a vehicle suspension system. Hence, a solid-state "relay" solution is more reliable than a mechanical solution.

Because failsafe clamping circuit 77 provides a failsafe function, it is desirable for the "relay" to have a normally-closed behavior. In other words, by default (i.e., with no power applied), the failsafe clamping circuit 77 should operate such that the coils are clamped and damping is provided. One example of a normally-closed solid-state device is a depletion-mode junction field effect transistor (JFET). Normally-closed solid-state devices, like JFETs, are typically rated for low currents (i.e., hundreds of milliamps), low voltages (i.e., tens of Volts), and low power (i.e., a few Watts). A vehicle suspension system incorporating an electromagnetic actuator typically requires high power. As such, normally-closed solid-state solutions cannot be used.

Another design alternative is to use a normally-open solid-state solution. Examples of normally-open devices include enhancement-mode devices like metal oxide semiconductor field effect transistors (MOSFETs), bipolar junction transistors (BJTs), insolated gate bipolar transistors (IGBTs), and silicon-controlled rectifiers (SCRs). To operate the failsafe clamping function, power must be provided to enable these types of devices. Because both MOSFETs and IGBTs require very little power to turn them on and keep them on, they are good choices. Failsafe clamping circuit 77 is described using an IGBT, but it should be understood that other normally-open devices can be used.

As armature 14 moves relative to stator 16, it is possible for both positive and negative currents to be generated in the coils of stator 16. As a result, the solid-state switch should allow bi-directional current flow. Most solid-state switches are either unidirectional or difficult to turn on in a bi-directional mode. Therefore, failsafe clamping circuit 77 includes a multi-phase full-wave rectifier bridge 78 to steer the bi-directional voltages and currents of the phases to a single, unidirectional voltage and current. As such, only one unidirectional switch 79 is used.

In order to provide the failsafe clamping function, circuit 77 should provide power to enable, by closing, the normally-open switch 79. This power can be provided by a storage device such as a battery or a capacitor. However, solutions that utilize a storage device are susceptible to failure if the storage device fails.

Another manner of providing power to enable the normally-open switch 79 is to use power associated with the back EMF. If the armature 14 is not moving relative to the stator 16, no damping force needs to be provided and the normally-open switch 79 can remain open. However, when the armature 14 begins to move relative to the stator 16, the switch 79 must be closed.

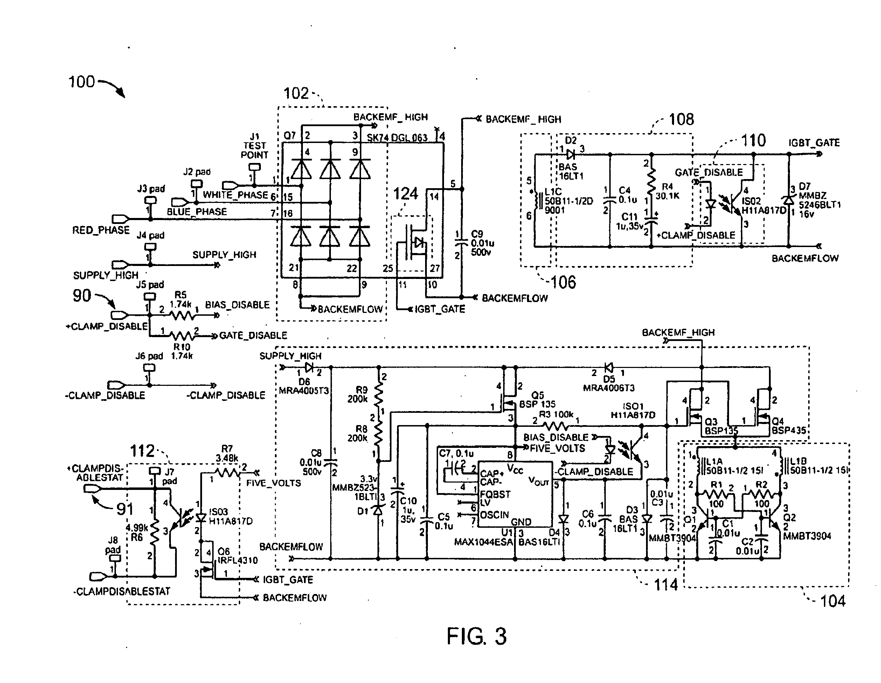

As shown in FIG. 3, a circuit 100 implements one example of a failsafe clamping circuit that enables the switch 79 to adapt to receive the back EMF. Three coils are connected through a three-phase, full-wave rectifier 102. A three-phase configuration is shown as an example, but it should be understood that other numbers of phases and coil arrangements can also be clamped. A rectifier 102 generates two outputs, labeled BACKEMF_HIGH and BACKEMF_LOW. The normally-open switch used in this example is IGBT 124. When the IGBT gate is turned on (i.e., a voltage of 5 to 15 Volts is present on IGBT_GATE), the IGBT 124 shorts together the two outputs of the full-wave rectifier 102. This effectively clamps the coils and provides the desired damping function. When IGBT 124 is enabled and the actuator coil assembly is being clamped, the voltage across IGBT 124 (i.e., BACKEMF_HIGH less BACKEMF_LOW, which corresponds to the output of the full-wave rectifier) is approximately 1 Volt.

The amount of damping can be controlled by connecting either a fixed or a variable resistor (not shown) between the IGBT 124 and the output of the rectifier 102. The amount of damping can also be controlled by electrically connecting only a subset of the coils or windings for an actuator having a multiple-phase coil assembly. The amount of damping can be further controlled by pulsing switch 79 on and off. By pulsing switch 79, the amount of damping can be dynamically varied between zero and some maximum amount. An example of pulsing switch 79 would be to pulse-width-modulate the IGBT_GATE signal at a fixed frequency and vary the duty cycle between 0 and 100%.

The back EMF generated by relative motion of the stator 16 and armature 14 is used to generate a voltage to enable IGBT 124. When the armature 14 first starts moving, some small back EMF voltage is generated. Because IGBT 124 is not fully enabled until the gate voltage reaches at least 5 Volts, the back EMF voltage is boosted up before driving the gate. Since enabling the gate of an IGBT requires at least 5 Volts and since the enabled IGBT sees a voltage of about 1 Volt, a boost ratio greatly exceeding 5-to-1 is desired. In practice, a much higher boost ratio is desirable, so that the IGBT gate can be enabled at extremely small levels of back EMF.

One method for boosting the voltage is to use a transformer. Permeable core transformers that work at less than 20 Hertz (which corresponds to the dominant frequency components of the back EMF) are large and somewhat impractical. Instead, Royer oscillator circuit 104 is used. The oscillator 104 begins operating when the back EMF reaches approximately 0.5 Volts and oscillates at a frequency of approximately a few kilohertz. The output of the oscillator 104 is then passed to a high-frequency step-up transformer 106. For the exemplary circuit, a boost ratio of 60 (using a turns ratio of 900 to 15) is provided. The output of transformer 106 is rectified and stored in circuit 108. The output of circuit 108 is then used to drive the gate of IGBT 124. By using the Royer oscillator circuit 104, only approximately 0.5 Volts of back EMF is needed to enable IGBT 124 and clamp the coils of the stator 16. Once the IGBT 124 is enabled, a capacitance in circuit 108 keeps the IGBT 124 enabled even after the armature 14 slows down. No external power is required to clamp the coils; only the back EMF is used to enable the IGBT 124.

Because failsafe clamping circuit 100 provides a failsafe function, its default state is enabled (i.e., it clamps the motor leads). Hence, at system startup, before power electronics 54 are ready to take control of the coils, any back EMF automatically causes the coil ends to be clamped. The power electronics 54 will first enter the active clamping mode before signaling failsafe clamping circuit 77, using the CLAMP_DISABLE signal 90, to disable the clamp circuit 100. Then, once failsafe clamping circuit 100 has acknowledged the request to disable, using signal CLAMPDISABLESTAT 91, power electronics 54 can begin switching. In this condition, power electronics 54 can control the currents flowing into the coils and, as a result, control, via an electronic controller, the force generated by the actuator 12. This condition is considered the "normal operating mode" of actuator 12. At system shutdown, power electronics 54 enters the active clamping mode and then signals failsafe clamping circuit 100 to enable by changing the state of the CLAMP_DISABLE signal 90. Both the failsafe clamping circuit 100 and the active clamping mode can be enabled simultaneously, as they provide redundant functions. When external power is eventually removed from the system, power electronics 54 completely releases control of the coils, while the failsafe clamping circuit 100 continues to operate and clamp the coil ends whenever sufficient back EMF is generated.

The power electronics 54 can have a series of internal diagnostic checks, and the failsafe clamp circuit 100 can be enabled whenever a failure is detected. Power electronics 54 failures can include out-of-range voltage conditions, failure of a power switch, over/under temperature limits, loss of communication with the electronic controller, and over-current detection. If a failure occurs while power electronics 54 are switching (i.e., during the "normal operating mode" of actuator 12), power electronics 54 signal the failsafe clamping circuit 100 to enable by changing the state on the CLAMP_DISABLE signal 90. At the same time, power electronics 54 stops switching and can attempt to provide a redundant damping function using the active clamping mode.

The CLAMP_DISABLE signal 90 from power electronics 54 is used to disable the failsafe clamping circuit 100 using opto-isolator 110. This action is then acknowledged by circuit 112 using the CLAMPDISABLESTAT signal 91. By sharing the failsafe clamping circuit's status with power electronics 54, a system is protected against a cable break between the power electronics 54 and failsafe clamping circuit 100. If a cable break occurs, power electronics 54 stops switching and failsafe clamping circuit 100 engages. This ensures that power electronics 54 never attempts to switch its half-bridges when the failsafe clamping circuit 100 is enabled. The failsafe clamping circuit 100 and the active clamp are sequentially disabled when switching back from failure to normal operation mode.

Circuit 114 inhibits the operation of the Royer oscillator circuit 104 and protects circuit 104 from exposure to high switching voltages whenever the CLAMP_DISABLE signal 90 is asserted.

In other examples the failsafe clamp circuit 100 can be powered by other power sources, such as, for example, a large valued capacitor or a battery.

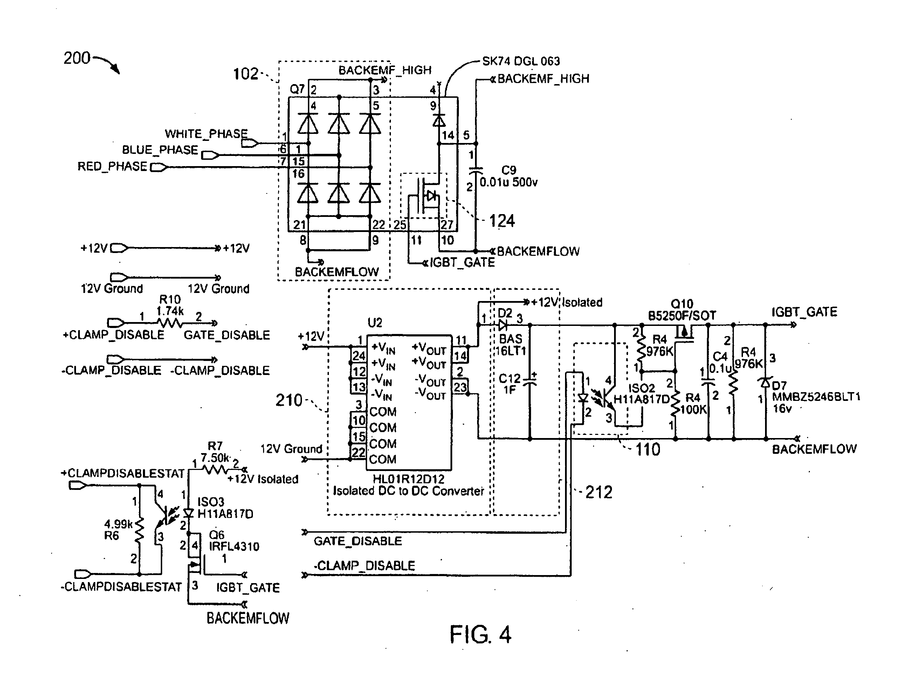

FIG.4 shows a failsafe clamp circuit 200 powered by a large valued capacitor which includes a three-phase, full-wave rectifier 102 with two outputs, labeled BACKEMF_HIGH and BACKEMF_LOW and a normally open silicon switch IGBT 124. A large valued capacitor 212 is used as a storage element. Its output is further utilized to drive the gate of IGBT 124. An isolated supply 210 keeps the capacitor 212 charged while the vehicle is operating normally. As in FIG. 3, the opto-isolator 110 is used to disable the failsafe clamping circuit 200.

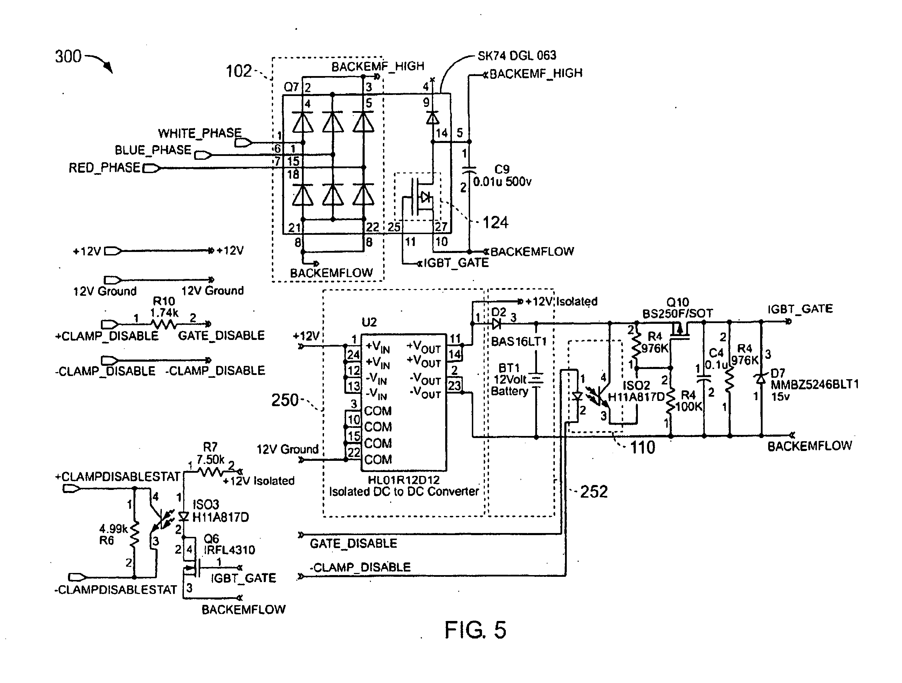

FIG.5 shows failsafe clamp circuit 300 powered by a battery 252. The battery 252 is used as a storage element and its output is utilized to drive the gate of IGBT 124. The battery 252 can be either a primary cell or a secondary cell and an isolated supply 250 can keep the battery 252 charged while the vehicle is operating normally. The opto-isolator 110 is used to disable the failsafe clamping circuit 300.

The invention has been described in terms of particular embodiments. Other embodiments are within the scope of the following claims.

## Claims

1. A vehicle suspension system having
an electromagnetic actuator (12) having an armature (14) and a stator (16) including a coil assembly, and
power electronics (54) for powering the electromagnetic actuator in normal use; **characterised by**
a clamp circuit (100), the clamp circuit being powered on failure of the power to the actuator by a back EMF generated within and as a result of movement of the actuator by the armature moving relative to the stator, and the clamp circuit (100) including a solid state switch (124) disposed across the coil assembly, and the clamp circuit being arranged so that, upon a loss of power to the actuator, the switch (124) is closed so as to clamp the coil assembly and cause a dynamically variable damping force to be generated on movement of the electromagnetic actuator.

2. The vehicle suspension system of claim 1, in which the clamp circuit (100) is enabled during a vehicle startup and shutdown.

3. The vehicle suspension system of claim 1, further comprising:
an electronic controller adapted to produce an actuator control signal; and wherein
the actuator (12) is adapted to receive electrical power from an external power source and to produce a controlled force in response to the actuator control signal produced by the electronic controller.

4. The vehicle suspension system of claim 1, which includes a multiple-phase coil assembly, the switch electrically connecting one or more coil ends to change the passive damping characteristic of the actuator (12).

5. The vehicle suspension system of claim 1, which includes a multiple-phase coil assembly, and in which movement of the actuator generates an electromotive force (EMF) to power the switch (124) to maintain electrical connection between windings of the coil assembly.

6. The vehicle suspension system of claim 1, including a power source in the form of a battery.

7. The vehicle suspension system of claim 1, including a power source in the form of a large valued capacitor.

8. The vehicle suspension system of claim 1, in which the clamp circuit (100) includes a rectifier (102) and the switch (124) is a single unidirectional switch.

9. The vehicle suspension system of claim 1, in which the actuator includes an armature (14) and a stator (16), movement of the actuator generating a back electromotive force (EMF) as a result of the armature moving relative to the stator within the actuator, the back EMF powering the switch on failure of the power to the actuator.

10. The vehicle suspension system of claim 1, in which the back EMF is boosted by a supplemental circuit.

11. The system of claim 10, in which the supplemental circuit comprises a bipolar Royer oscillator (104) capable of operating at an input voltage of approximately 0.5 volts.

12. The vehicle suspension system of claim 1, in which the actuator motor is a linear motor.

13. The vehicle suspension system of claim 1, in which the actuator motor is a rotary motor.

14. A method of operating a vehicle suspension system according to any of claims 1 to 13, including generating a passive damping characteristic of the actuator (12) by movement of the actuator.

## Patentansprüche

1. Fahrzeugfederungssystem
- mit einem elektromagnetischen Antrieb (12), der einen Rotor (14) und einen Stator (16) umfasst, enthaltend eine Spulenanordnung, und
- Leistungselektronik (54) zum Versorgen des elektromagnetischen Antriebs mit Leistung bei normalem Betrieb, **gekennzeichnet durch**
- eine Klemmschaltung (100), wobei die Klemmschaltung bei Leistungsverlust für den Antrieb **durch** eine rückspeisende elektromagnetische Kraft versorgt wird, die innerhalb und als Ergebnis der Bewegung des Antriebs **durch** den Rotor, der sich in Bezug auf den Stator bewegt, erzeugt wird, und wobei die Klemmschaltung (100) einen Festkörperschalter (124) umfasst, der über die Spulenanordnung angeordnet ist, und wobei die Klemmschaltung dergestalt angeordnet ist, dass bei einem Leistungsverlust für den Antrieb der Schalter (124) geschlossen wird, um die Spulenanordnung kurzzuschliessen und um bei Bewegung des elektromagnetischen Antriebs das Erzeugen einer dynamisch variablen Dämpfungskraft zu bewirken.

2. Fahrzeugfederungssystem gemäss Anspruch 1, bei dem die Klemmschaltung (100) während eines Fahrzeuganlass- und -abschaltvorgang eingeschaltet wird.

3. Fahrzeugfederungssystem gemäss Anspruch 1, weiterhin umfassend:
- eine elektronische Steuerung, die geeignet ist, ein Antriebsteuersignal zu erzeugen und wobei
- der Antrieb (12) angepasst ist, um elektrische Leistung von einer externen Leistungsquelle zu empfangen und um eine gesteuerte Kraft in Antwort auf das Antriebsteuersignal zu erzeugen, welches von der elektronischen Steuerung erzeugt wird.

4. Fahrzeugfederungssystem gemäss Anspruch 1, welches eine Spulenanordnung mit multipler Phase enthält, wobei der Schalter, der in elektrischer Weise ein oder mehrere Spulenenden verbindet, um die passive Dämpfungscharakteristik des Antriebs (12) zu verändern.

5. Fahrzeugfederungssystem gemäss Anspruch 1, welches eine Spulenanordnung mit mehrfacher Phase beinhaltet, und bei dem die Bewegung des Antriebs eine elektromotorische Kraft (EMF) erzeugt, um den Schalter (124) mit Leistung zu versehen, um eine elektrische Verbindung zwischen den Windungen der Spulenanordnung aufrecht zu erhalten.

6. Fahrzeugfederungssystem gemäss Anspruch 1, umfassend eine Leistungsquelle in Form einer Batterie.

7. Fahrzeugfederungssystem gemäss Anspruch 1, umfassend eine Leistungsquelle in Form eines eine grosse Kapazität aufweisenden Kondensators.

8. Fahrzeugfederungssystem gemäss Anspruch 1, bei dem die Klemmschaltung (100) einen Gleichrichter (102) umfasst und der Schalter (124) ein einzelner unidirektionaler Schalter ist.

9. Fahrzeugfederungssystem gemäss Anspruch 1, bei dem der Antrieb einen Rotor (14) und einen Stator (16) umfasst, wobei die Bewegung des Antriebs eine rückspeisende elektromotorische Kraft als ein Ergebnis der Bewegung des Rotors relativ zum Stator innerhalb des Antriebs erzeugt, wobei die rückspeisende elektromotorische Kraft den Schalter bei Leistungsverlust des Antriebs mit Leistung verseht.

10. Fahrzeugfederungssystem gemäss Anspruch 1, bei dem die rückspeisende elektromotorische Kraft durch einen zusätzlichen Schaltkreis erhöht wird.

11. System gemäss Anspruch 10, bei dem der zusätzliche Schaltkreis einen bipolaren Royer- Oszillator (104) umfasst, der fähig ist, bei Eingangsspannungen von ungefähr 0.5 Volt zu arbeiten.

12. Fahrzeugfederungssystem gemäss Anspruch 1, bei dem der Antrieb ein Linearmotor ist.

13. Fahrzeugfederungssystem gemäss Anspruch 1, bei dem der Antrieb ein Drehantrieb ist.

14. Verfahren zum Betreiben eines Fahrzeugfederungssystems gemäss einem der vorstehenden Ansprüche 1 bis 13, umfassend das Erzeugen einer passiven Dämpfungscharakteristik des Antriebs (12) durch Bewegung des Antriebs.

## Revendications

1. Système de suspension pour un véhicule
- avec un actuator électromagnétique (12), qui comprend un rotor (14) et un stator (16), comprenant un agencement de bobines, et
- avec une électronique de puissance (54) pour alimenter l'actuator électromagnétique pendant une utilisation normale, **caractérisé par**
- un circuit de verrouillage (100), où le circuit de verrouillage est alimenté lors d'une perte de puissance pour l'actuator par une force électromagnétique en retour, qui est générée à l'intérieur et en tant que résultat du mouvement de l'actuator par le rotor, qui est déplacé par rapport du stator, et où le circuit de verrouillage (100) comprend un interrupteur à état solide (124), qui est positionné sur l'agencement de bobines, et où le circuit de verrouillage est positionné de telle façon, que l'interrupteur (124) est fermé lors d'une perte de puissance de l'actuator pour court-circuiter l'agencement de bobines et pour causer lors du déplacement de l'actuator électromagnétique de générer une force d'atténuation dynamiquement variable.

2. Système de suspension pour un véhicule selon la revendication 1, où le circuit de verrouillage (100) est mis en marche lors d'une mise en marche ou lors d'un arrêt du véhicule.

3. Système de suspension pour un véhicule selon la revendication 1, comprenant aussi:
- un circuit de contrôle électronique qui est adapté pour créer un signal de contrôle d'actuator et où
- l'actuator (12) est adapté pour recevoir de la puissance électrique d'une alimentation externe et pour générer une force contrôlée en réponse au signal de contrôle d'actuator, qui est généré par le circuit de contrôle électronique.

4. Système de suspension pour un véhicule selon la revendication 1, qui comprend un agencement de bobines à phase multiple, où l'interrupteur connecte une ou plusieurs extrémités de bobines en conducteur pour changer la caractéristique d'atténuation passive de l'actuator (12).

5. Système de suspension pour un véhicule selon la revendication 1, qui comprend un agencement de bobines à phase multiple, et où le déplacement de l'actuator crée une force électromotrice (EMF) pour fournir de la puissance à l'interrupteur (124) pour maintenir une connexion électrique entre les spires de l'agencement des bobines.

6. Système de suspension pour un véhicule selon la revendication 1, comprenant une alimentation en forme d'une batterie.

7. Système de suspension pour un véhicule selon la revendication 1, comprenant une alimentation en forme d'une capacité possédant une grande valeur.

8. Système de suspension pour un véhicule selon la revendication 1, où le circuit de verrouillage (100) comprend un redresseur (102) et où l'interrupteur (124) est un interrupteur isolé et unidirectionnel.

9. Système de suspension pour un véhicule selon la revendication 1, où l'actuator comprend un rotor (14) et un stator (16), où le déplacement de l'actuator crée une force électromotrice an retour en tant que résultat du mouvement du rotor relatif au stator à l'intérieur de l'actuator, où la force électromotrice de retour alimente l'interrupteur lors d'une perte de puissance pour l'actuator.

10. Système de suspension pour un véhicule selon la revendication 1, où la force électromotrice de retour est augmentée par un circuit supplémentaire.

11. Système selon la revendication 10, où le circuit supplémentaire comprend un oscillateur Royer (104) bipolaire, étant capable de travailler avec des tensions d'entrée d'environ 0.5 Volt.

12. Système de suspension pour un véhicule selon la revendication 1, où l'actuator est un actuator linéaire.

13. Système de suspension pour un véhicule selon la revendication 1, où l'actuator est un actuator rotatif.

14. Procédé pour pratiquer un système d'une suspension pour véhicules selon l'une quelconque des revendications précédentes 1 à 13, comprenant de générer une caractéristique d'atténuation passive de l'actuator (12) par déplacement de l'actuator.
